# EUROPÄISCHE PATENTSCHRIFT

(11) **EP 2 718 152 B1**
(45) Veröffentlichungstag und Bekanntmachung des Hinweises auf die Patenterteilung: **17.08.2016**
(21) Anmeldenummer: 12729351.2
(22) Anmeldetag: 05.06.2012
(51) Int. Cl.: B60R 21/02, B60R 21/00

(54) **RÜCKHALTESYSTEM FÜR EINEN FAHRER EINES FAHRZEUGS**
RESTRAINT SYSTEM FOR A DRIVER OF A VEHICLE
SYSTÈME DE RETENUE POUR LE CONDUCTEUR D'UN VÉHICULE

(30) Priorität: 09.06.2011 DE 202011102738 U
(43) Veröffentlichungstag der Anmeldung: 16.04.2014
(73) Patentinhaber: HSM Hans Sauermann GmbH & Co. KG, 85119 Ernsgaden (DE)
(72) Erfinder: SAUERMANN, Hans, 85119 Emsgaden (DE)
(74) Vertreter: Witzany, Manfred
(86) Internationale Anmeldenummer: PCT/EP2012/002381
(87) Internationale Veröffentlichungsnummer: WO 2012/167910

(56) Entgegenhaltungen:
- WO-A1-97/06986
- DE-A1-102006 020 900
- DE-U1- 20 015 817
- US-B1- 7 156 443

## Beschreibung

Die Erfindung betrifft ein Rückhaltesystem für einen Fahrer eines Fahrzeugs gemäß dem Oberbegriff des Patentanspruchs 1.

Aus der EP 1 145 919 sowie der DE 200 15 817 U ist ein gattungsgemäßes Rückhaltesystem für einen Fahrer eines Fahrzeugs bekannt. Dieses Rückhaltesystem weist einen neben dem Fahrersitz angeordneten Schutzbügel auf, der um eine horizontale und quer zur Fahrzeuglangserstreckung verlaufende Welle zwischen einer vertikalen Freigabestellung und einer horizontalen Rückhaltestellung verschwenkbar ist. Zur Betätigung dieses Schutzbügels ist ein Motor mit einem Getriebe vorgesehen, der auf die Welle einwirkt, die mit dem Schutzbügel verbunden ist. Dieses Rückhaltesystem hat sich in der Praxis vielfach bewährt und bildet den Ausgangspunkt der vorliegenden Erfindung.

Aus der US 7,156,443 B1 ist ein Sicherheitssystem für ein Golfcart bekannt. Dieses besteht aus zwei neben den Fahrersitzen angeordneten Schutzbügeln. Diese Schutzbügel sind um eine horizontale Achse verschwenkbar abgestützt. Die Verschwenkung erfolgt von Hand.

Aus der WO 097/06986 A ist ein Airbag-System als Seitenaufprallschutz bekannt. Dieses besteht aus einem seitlich neben dem Fahrersitz angeordneten Modul, welches den Airbag aufnimmt. Dieses Modul ist mittels eines Schwenkmechanismus in eine hochgeklappte Sicherheitsstellung und in eine nach unten verschwenkte Ein-Ausstiegsstellung verschwenkbar. Zum Verschwenken dieses Moduls ist ein Getriebemotor vorgesehen, der an einer Schwenkwelle angreift.

Aus der DE 10 2006 020 900 A1 ist ein Fahrzeugsitz mit einem Rückhaltebügel bekannt, der beidseitig neben einer Kopfstütze vorgesehen ist. Dieser Rückhaltebügel ist zwischen einer Rückhaltestellung und einer Freigabestellung verschwenkbar. Zum Verschwenken ist ein Getriebemotor vorgesehen, der unmittelbar an der Schwenkwelle des Rückhaltebügels angreift.

Aus der DE 200 15 817 U1 ist ein gattungsgemäßes Rückhaltesystem für einen Fahrer eines Flurförderfahrzeugs bekannt. Dieses Rückhaltesystem weist einen Schutzbügel auf, der von einem Hydraulikzylinder betätigbar ist. Der Hydraulikzylinder ist dabei beidseitig gelenkig, einerseits am Fahrzeug und andererseits am Schutzbügel gelagert. Je nach Lage des Schutzbügels befindet sich das fahrzeugfeste Gelenk einmal oberhalb und einmal unterhalb des Schutzbügels. Das schutzbügelseitige Gelenk greift an einer hebelartigen Verlängerung des Schutzbügels an. Auf diese Weise ergibt sich zwar ein sehr kompakter und damit platzsparender Aufbau, jedoch stellen sich sehr ungünstige Hebelverhältnisse ein, die die praktische Nutzung dieses Rückhaltesystems unmöglich machen.

Der Erfindung liegt die Aufgabe zugrunde, ein Rückhaltesystem der eingangs genannten Art zu schaffen, das sich durch einen einfachen Aufbau auszeichnet und damit kostengünstig herstellbar ist.

Diese Aufgabe wird erfindungsgemäß mit den Merkmalen des Patentanspruchs 1 gelöst.

Das Rückhaltesystem gemäß Anspruch 1 weist mindestens einen Schutzbügel auf, der seitlich neben einem Fahrersitz eines Fahrzeugs angeordnet ist. Dieser Schutzbügel ist um eine in etwa horizontale und quer zur Fahrzeuglängserstreckung verlaufende Achse verschwenkbar abgestützt. Dabei kann der Schutzbügel zwischen einer in etwa vertikalen Freigabestellung und einer in etwa horizontalen Rückhaltestellung verschwenkt werden. In der Freigabestellung nimmt der Schutzbügel dabei eine Stellung ein, die ein einfaches Ein- bzw. Aussteigen in bzw. aus dem Fahrzeug erlaubt. In der Rückhaltestellung dagegen schützt der Schutzbügel den Fahrer indem er ihn bei Unfällen in der Fahrzeugkabine zurückhält. Insbesondere beim Umkippen des Fahrzeugs kann es passieren, dass der Fahrer aus der Kabine geschleudert wird oder dieser bewusst vom Fahrzeug abspringt. Oftmals gerät der Fahrer dann unter das umkippende Fahrzeug, was zu Quetschverletzungen oder zum Tod führen kann.

Zur Erzielung eines möglichst einfachen Aufbaus des Rückhaltesystems greift einerseits am Schutzbügel und andererseits an einem fahrzeugfesten Teil mindestens ein Motor an, der beidseitig in Gelenken gelagert ist. Der Abstand dieser Gelenke ist dabei durch den Motor einstellbar. Damit bestimmt der Motor den Abstand der beiden Gelenke und somit die Schwenklage des Schutzbügels. Folglich können Getriebeelemente entfallen, die das Drehmoment des Motors auf eine Welle übertragen. Außerdem ergibt sich für den Anlenkpunkt des Motors am Schutzbügel ein günstiges Hebelverhältnis, so dass der Motor und alle mechanischen Verbindungsteile nur mäßig belastet sind.

Damit kann der gesamte Schutzbügel und insbesondere dessen Lagerung schwach und damit kleinbauend ausgebildet werden.

Weist der Motor gemäß Anspruch 2 zusätzlich ein selbsthemmendes Getriebe auf, so ist eine Verstellung des Motors durch Krafteinwirkung auf den Schutzbügel ausgeschlossen. Der Schutzbügel verharrt daher ohne Betätigung des Motors in seiner zuvor eingenommenen Lage. Damit können zusätzliche Verriegelungsmittel wie beispielsweise ein Schloss entfallen. Außerdem müssen keinerlei Maßnahmen zur Entriegelung des Schutzbügels in der Rückhaltestellung vorgesehen werden. Es reicht völlig aus, den Motor zu betätigen.

Da insbesondere in Flurförderfahrzeugen oftmals kein Hydraulik- oder Pneumatiknetz vorgesehen ist, ist es gemäß Anspruch 3 vorteilhaft, wenn der Motor einen Elektroantrieb aufweist. Ein elektrisches Netz ist in jedem Flurförderfahrzeug enthalten, so dass zum Betrieb dieses Motors keine wesentlichen Zusatzaufwendungen erforderlich sind.

Um zu verhindern, dass der Schutzbügel an der Fahrzeughaube oder an der hinteren Säule anschlägt, ist es gemäß Anspruch 4 vorteilhaft, wenn der Motor mindestens einen Endausschalter aufweist. Dieser Endausschalter stoppt die Motorbewegung bei dessen Betätigung, so dass der Schutzbügel nur bis zu einem bestimmten, vorgegebenen Punkt verschwenkt wird. Vorzugsweise sind zwei Endausschalter vorgesehen, die die Lage des Schutzbügels in der Rückhalte- und in der Freigabestellung definieren.

Sind die Endausschalter gemäß Anspruch 5 verstellbar, so kann durch Anpassung der Position der Endausschalter der Stellweg des Motors angepasst werden. Eine derartige Anpassung ist insbesondere in jenen Fällen notwendig, in denen das Rückhaltesystem für unterschiedliche Fahrzeugtypen genutzt werden soll. In diesem Fall kann die Anpassung des Rückhaltesystems an unterschiedliche bauliche Gegebenheiten in den verschiedenen Fahrzeugen einfach durch Einstellen des Endausschalters realisiert werden. Sind beide Endstellungen mit verstellbaren Endausschaltern ausgerüstet, so kann auf diese Weise die Winkellage des Schutzbügels sowohl in der Rückhaltestellung als auch in der Freigabestellung individuell an die Gegebenheiten des Fahrzeugs angepasst werden. Zusätzliche Einstellmöglichkeiten können in diesem Fall entfallen.

Insbesondere unter beengten Verhältnissen kann es erforderlich sein, dass der Schutzbügel in der Freigabestellung relativ nahe an der hinteren Säule der Kabine des Fahrzeugs anliegt. Hat der Fahrer während des Verschwenkens des Schutzbügels in die Freigabestellung seine Hand auf dem Schutzbügel liegen, so kann dies zu einer Quetschung führen. Zur Vermeidung dieses Problems ist es gemäß Anspruch 6 vorteilhaft, wenn der Motor über mindestens eine Feder am Schutzbügel bzw. am fahrzeugfesten Teil angekoppelt ist. Die Stärke dieser Feder sollte dabei derart bemessen sein, dass eine Quetschung der Hand vermieden wird. Der Schutzbügel kann im oben geschilderten Fall unter Dehnung oder Stauchung der Feder von der hinteren Säule des Fahrzeugs wegverschwenkt werden, wodurch die Hand vor Quetschungen geschützt ist.

Um erkennen zu können, ob sich der Schutzbügel in seiner Rückhaltestellung befindet, ist es gemäß Anspruch 7 vorteilhaft, wenn der Motor mit mindestens einer Positionsmeldeeinrichtung ausgerüstet ist. Diese Positionsmeldeeinrichtung liefert entweder die aktuelle Position des Motors oder ein Signal, welches die Einnahme der Rückhaltestellung anzeigt. Mit diesem Signal kann geprüft werden, ob sich der Schutzbügel ordnungsgemäß in seiner Rückhaltestellung befindet.

Gemäß Anspruch 8 ist es vorteilhaft, wenn diese Positionsmeldeeinrichtung die Fährt des Fahrzeugs beeinflusst. Insbesondere kann beispielsweise das Fahrzeug in einen Kriechgang gezwungen werden, in dem die erreichbare Höchstgeschwindigkeit sehr reduziert ist. Damit kann der Fahrer den Schutzbügel in die Freigabestellung bringen, um beispielsweise an einer schwer einzusehenden Stelle seine Ladung abzulegen. Durch die Maßnahme, dass das Fahrzeug in diesem Fall nur sehr langsam bewegt werden kann, ist die Unfallgefahr entsprechend reduziert, so dass der in seiner Freigabestellung befindliche Schutzbügel tolerierbar ist.

Um sicherzustellen, dass das Fahrzeug nur mit in der Rückhaltestellung befindlichem Schutzbügel fahren kann, ist es gemäß Anspruch 9 vorteilhaft, wenn der Motor mit einer Bremsvorrichtung des Fahrzeugs in Wirkverbindung steht. Vorzugsweise steht der Motor mit einer Handbremse in Wirkverbindung. Dies hat zur Folge, dass der Schutzbügel in seine Rückhaltestellung überführt wird, sobald die Handbremse gelockert wird.

Zur Erzielung einer universellen Einsetzbarkeit des Rückhaltesystems ist es gemäß Anspruch 10 günstig, wenn die Achse an einer Säule, an einer Motorhaube und/oder einer Batteriehaube des Fahrzeugs angebracht ist. Dann stehen für unterschiedliche Fahrzeugtypen verschiedenste Anbringungsmöglichkeiten zur Verfügung. Insbesondere durch die einfache Einstellbarkeit des Schutzbügels spielt die Neigung der Säule bzw. der Haube keinerlei Rolle.

Schließlich ist es gemäß Anspruch 11 günstig, wenn der Schutzbügel zusätzlich um eine weitere Achse nach Außen schwenkbar ist. Durch diese Verschwenkung ist der Zugang zur Motor- oder Batteriehaube vereinfacht, um Revisionsarbeiten durchzuführen. Die konkrete Ausrichtung dieser Achse spielt dabei keine Rolle.

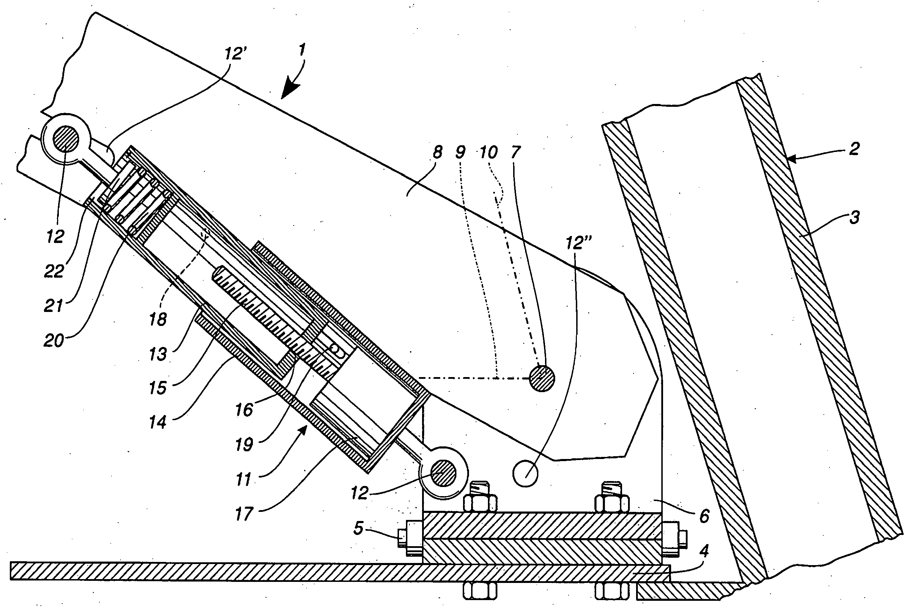

Der Erfindungsgegenstand wird beispielhaft anhand der Zeichnung erläutert ohne den Schutzumfang zu beschränken.

Die einzige Figur zeigt eine Schnittdarstellung durch ein Rückhaltesystem 1 für ein Fahrzeug 2. Das Fahrzeug 2 weist eine Säule 3 auf, die ein nicht dargestelltes Kabinendach trägt. Außerdem weist das Fahrzeug 2 eine Haube 4 auf, welche als Batterie- oder Motorhaube ausgebildet ist, je nachdem ob es sich um ein Elektro- oder Verbrennungsmotorfahrzeug handelt. Vorzugsweise handelt es sich beim Fahrzeug 2 um ein Flurförderfahrzeug, wobei die Anwendung des Rückhaltesystems nicht auf solche Fahrzeuge begrenzt ist.

Das Rückhaltesystem 1 ist an der Haube 4 festgelegt. Hierzu weist das Rückhaltesystem 1 ein Scharnier 5 auf, welches eine horizontale Scharnierachse besitzt. Damit kann das gesamte Rückhaltesystem 1 um diese Scharnierachse aus der Fahrzeugkabine herausgeklappt werden, um die Haube 4 leichter öffnen zu können.

Am Scharnier 5 ist ein Lagerbock 6 festgelegt, der eine Achse 7 trägt. An dieser Achse 7 ist ein Schutzbügel 8 verschwenkbar abgestützt, von dem nur ein Teil dargestellt ist. Der Schutzbügel 8 ist zwischen einer im Wesentlichen horizontalen Rückhaltestellung 9 und einer im Wesentlichen vertikalen Freigabestellung 10 verschwenkbar. Die Rückhalte- 9 und Freigabestellung 10 sind in ihrer Schwenklage hauptsächlich durch die Haube 4 und die Säule 3 vorgegeben.

Um den Schutzbügel 8 zwischen der Rückhalte- 9 und Freigabestellung 10 verschwenken zu können, weist das Rückhaltesystem 1 mindestens einen Motor 11 auf. Dieser ist einerseits am Lagerbock 6 und damit am Fahrzeug 2 und andererseits am Schutzbügel 8 abgestützt. Beide Abstützungen erfolgen über Gelenke 12.

Um die Lage des Schutzbügels 8 in der Rückhaltestellung 9 und in der Freigabestellung 10 anpassen zu können, sind die Anlenkungspunkte der Gelenke 12 variabel. Hierzu kann das Gelenk 12 in einem Langloch 12' festgelegt werden, so dass der Anlenkungspunkt verschiebbar ist. Alternativ ist auch daran gedacht, für das Gelenk 12 mehrere Aufnahmebohrungen 12" vorzusehen. Diese beiden Varianten sind im Ausführungsbeispiel in Kombination dargestellt. Grundsätzlich ist auch daran gedacht, nur eines der Gelenke 12 einstellbar zu machen oder bei beiden Gelenken 12 jeweils eine kontinuierliche oder jeweils eine diskontinuierliche Einstellmöglichkeit vorzusehen.

Alternativ ist außerdem daran gedacht, den gesamten Lagerbock 6 verschwenkbar auszubilden, um auf diese Weise den Stellweg des Motors 11 einzustellen.

Der Motor 11 weist ein Innenrohr 13 und ein Außenrohr 14 auf, die gegeneinander teleskopierbar sind. Zur axialen Verstellung des Außenrohrs 14 gegenüber dem Innenrohr 13 ist im Motor 11 eine Gewindespindel 15 vorgesehen, die drehbar aber axial fest im Außenrohr 14 gehalten ist. Am Innenrohr 13 ist ein Innengewinde 16 vorgesehen, welches mit der Gewindespindel 15 korrespondiert. Damit wird das Innenrohr 13 gegenüber dem Außenrohr 14 durch Verdrehung der Gewindespindel 15 axial verstellt.

Die Gewindespindel 15 steht mit einem Antrieb 17 in Wirkverbindung, der im Wesentlichen von einem Elektromotor mit nachgeschaltetem Getriebe gebildet ist. Dieses Getriebe ist dabei selbsthemmend ausgebildet, so dass der Motor 11 seine Stellung auch unter dem Einfluss einer auf den Schutzbügel 8 wirkenden Kraft beibehält, solange der Antrieb 17 nicht bewegt wird.

Im Motor 11 sind außerdem Endausschalter 18, 19 vorgesehen, welche mit dem Antrieb 17 in Wirkverbindung stehen. Sobald der Endausschalter 19 betätigt wird, ist ein weiteres Zusammenschieben des Teleskops, bestehend aus Innenrohr 13 und Außenrohr 14, nicht mehr möglich. Wird dagegen der Endausschalter 18 betätigt, so können die beiden Rohre 13, 14 nicht mehr auseinander gezogen werden.

Die beiden Endausschalter 18, 19 sind verstellbar angeordnet, so dass auf diese Weise der Stellweg des Motors 11 frei wählbar ist. Die Position des Endausschalters 18 definiert dabei die Lage des Schutzbügels 8 in der Freigabestellung 10. Die Lage des Endausschalters 19 definiert dagegen die Schwenklage des Schutzbügels 8 in der Rückhaltestellung 9.

Um zu verhindern, dass beim Verschwenken des Schutzbügels 8 in die Rückhaltestellung der Fahrer verletzt wird, ist der Motor 11 über eine Feder 20 an dem Schutzbügel 8 angekoppelt. Diese Feder 20 ist in einem weiteren Teleskop 21 gehalten. Trifft der Schutzbügel 8 beim Verschwenken in die Freigabestellung 10 auf ein Hindernis, wie beispielsweise eine zwischen dem Schutzbügel 8 und der Säule 3 befindlichen Hand, so wird die Feder 20 komprimiert, was ein Quetschen dieses Hindernisses verhindert. Auf diese Weise wird die Verletzungsgefahr reduziert. Ein Sicherungsring 22 verhindert die vollständige Trennung des Teleskops 21, wenn eine äußere Schubkraft fehlt.

### Bezugszeichenliste

- 1: Rückhaltesystem
- 2: Fahrzeug
- 3: Säule
- 4: Haube
- 5: Scharnier
- 6: Lagerbock
- 7: Achse
- 8: Schutzbügel
- 9: Rückhaltestellung
- 10: Freigabestellung
- 11: Motor
- 12: Gelenk
- 12': Langloch
- 12": Aufnahmebohrungen
- 13: Innenrohr
- 14: Außenrohr
- 15: Gewindespindel
- 16: Innengewinde
- 17: Antrieb
- 18: Endausschalter
- 19: Endausschalter
- 20: Feder
- 21: Teleskop
- 22: Sicherungsring

## Patentansprüche

1. Rückhaltesystem für einen Fahrer eines Fahrzeugs (2), das zumindest einen Fahrersitz aufweist, insbesondere eines Flurförderfahrzeugs (2), wobei das Rückhaltesystem (1) von mindestens einem seitlich neben dem Fahrersitz angeordneten Schutzbügel (8) gebildet ist, der um eine in etwa horizontale, quer zur Fahrzeuglängserstreckung verlaufende Achse (7) zwischen einer in etwa vertikalen Freigabestellung (10) und einer in etwa horizontalen Rückhaltestellung (9) verschwenkbar ist und zwischen dem Schutzbügel (8) und einem fahrzeugfesten Teil mindestens ein Motor (11) angreift, der beidendig in Gelenken (12) gelagert ist, deren gegenseitiger Abstand vom Motor (11) einstellbar ist, **dadurch gekennzeichnet, dass** das fahrzeugfeste Gelenk (12) unterhalb des Schutzbügels (8) und das schutzbügelseitige Gelenk (12) zwischen der Achse (7) und einem freien Ende des Schutzbügels (8) vorgesehen sind.

2. Rückhaltesystem nach Anspruch 1, **dadurch gekennzeichnet, dass** der Motor (11) mindestens ein selbsthemmendes Getriebe aufweist.

3. Rückhaltesystem nach Anspruch 1 oder 2, **dadurch gekennzeichnet, dass** der Motor (11) mindestens einen Elektromotor als Antrieb (17) aufweist.

4. Rückhaltesystem nach mindestens einem der Ansprüche 1 bis 3, **dadurch gekennzeichnet, dass** der Motor (11) mindestens einen Endausschalter (18, 19) aufweist, bei dessen Betätigung die Motorbewegung stoppt.

5. Rückhaltesystem nach Anspruch 4, **dadurch gekennzeichnet, dass** der Endausschalter (18, 19) verstellbar ist, um den Stellweg des Motors (11) anpassen zu können.

6. Rückhaltesystem nach mindestens einem der Ansprüche 1 bis 5, **dadurch gekennzeichnet, dass** der Motor (11) mit mindestens einer Feder (20) am Schutzbügel (8) und/oder am fahrzeugfesten Teil angekoppelt ist.

7. Rückhaltesystem nach mindestens einem der Ansprüche 1 bis 6, **dadurch gekennzeichnet, dass** der Motor (11) mindestens eine Positionsmeldeeinrichtung aufweist.

8. Rückhaltesystem nach Anspruch 7, **dadurch gekennzeichnet, dass** die Positionsmeldeeinrichtung die Fahrt des Fahrzeugs (2) beeinflusst, wenn sich der Schutzbügel (8) nicht in der Rückhaltestellung (9) befindet.

9. Rückhaltesystem nach mindestens einem der Ansprüche 1 bis 8, **dadurch gekennzeichnet, dass** der Motor (11) mit einer Bremsvorrichtung des Fahrzeugs in Wirkverbindung steht, so dass der Schutzbügel (8) bei fahrbereitem Fahrzeug (2) in die Rückhaltestellung (9) gebracht wird.

10. Rückhaltesystem nach mindestens einem der Ansprüche 1 bis 9, **dadurch gekennzeichnet, dass** die Achse (7) an einer Säule (3), einer Motor- und/oder Batteriehaube (4) des Fahrzeugs (2) abgestützt ist.

11. Rückhaltesystem nach mindestens einem der Ansprüche 1 bis 10, **dadurch gekennzeichnet, dass** der Schutzbügel (8) für Revisionsarbeiten am Fahrzeug (2) zusätzlich um eine weitere Achse nach außen schwenkbar ist.

## Claims

1. Restraint system for a driver of a vehicle (2) which has at least one driver's seat, in particular of an industrial truck (2), the restraint system (1) being formed by at least one guard hoop (8) which is arranged laterally next to the driver's seat and can be pivoted about an approximately horizontal pin (7) which runs transversely with respect to the vehicle longitudinal extent, between an approximately vertical release position (10) and an approximately horizontal restraint position (9), and at least one motor (11) acting between the guard hoop (8) and a part which is fixed to the vehicle, which motor (11) is mounted at both ends in joints (12), the mutual spacing of which can be set by the motor (11), **characterized in that** the joint (12) which is fixed to the vehicle is provided below the guard hoop (8) and the joint (12) on the guard hoop side is provided between the pin (7) and a free end of the guard hoop (8).

2. Restraint system according to Claim 1, **characterized in that** the motor (11) has at least one self-locking gear mechanism.

3. Restraint system according to Claim 1 or 2, **characterized in that** the motor (11) has at least one electric motor as drive (17).

4. Restraint system according to at least one of Claims 1 to 3, **characterized in that** the motor (11) has at least one limit switch (18, 19), upon the actuation of which the motor movement stops.

5. Restraint system according to Claim 4, **characterized in that** the limit switch (18, 19) is adjustable, in order for it to be possible to adapt the actuating travel of the motor (11).

6. Restraint system according to at least one of Claims 1 to 5, **characterized in that** the motor (11) is coupled with at least one spring (20) on the guard hoop (8) and/or on the part which is fixed to the vehicle.

7. Restraint system according to at least one of Claims 1 to 6, **characterized in that** the motor (11) has at least one position signalling device.

8. Restraint system according to Claim 7, **characterized in that** the position signalling device influences the driving of the vehicle (2) if the guard hoop (8) is not situated in the restraint position (9).

9. Restraint system according to at least one of Claims 1 to 8, **characterized in that** the motor (11) is operatively connected to a braking apparatus of the vehicle, with the result that the guard hoop (8) is moved into the restraint position (9) when the vehicle (2) is ready for driving.

10. Restraint system according to at least one of Claims 1 to 9, **characterized in that** the pin (7) is supported on a pillar (3) or a motor and/or battery cover (4) of the vehicle (2).

11. Restraint system according to at least one of Claims 1 to 10, **characterized in that** the guard hoop (8) can additionally be pivoted outwards about a further pin for inspection work on the vehicle (2).

## Revendications

1. Système de retenue pour un conducteur d'un véhicule (2), qui présente au moins un siège de conducteur, en particulier d'un chariot de manutention (2), le système de retenue (1) étant formé par au moins un arceau de sécurité (8) disposé latéralement à côté du siège du conducteur, qui peut pivoter autour d'un axe approximativement horizontal (7) s'étendant transversalement à l'étendue longitudinale du véhicule entre une position de libération approximativement verticale (10) et une position de retenue approximativement horizontale (9) et au moins un moteur (11) venant en prise entre l'arceau de sécurité (8) et une partie fixée au véhicule, lequel moteur est supporté aux deux extrémités dans des articulations (12) dont la distance mutuelle au moteur (11) peut être ajustée, **caractérisé en ce que** l'articulation fixée au véhicule (12) est prévue en dessous de l'arceau de sécurité (8) et l'articulation du côté de l'arceau de sécurité (12) est prévue entre l'axe (7) et une extrémité libre de l'arceau de sécurité (8).

2. Système de retenue selon la revendication 1, **caractérisé en ce que** le moteur (11) présente au moins une transmission autobloquante.

3. Système de retenue selon la revendication 1 ou 2, **caractérisé en ce que** le moteur (11) présente au moins un moteur électrique en tant qu'entraînement (17).

4. Système de retenue selon au moins l'une quelconque des revendications 1 à 3, **caractérisé en ce que** le moteur (11) présente au moins un interrupteur de fin de course (18, 19) dont l'actionnement arrête le mouvement du moteur.

5. Système de retenue selon la revendication 4, **caractérisé en ce que** l'interrupteur de fin de course (18, 19) est réglable de manière à pouvoir adapter la course de commande du moteur (11).

6. Système de retenue selon au moins l'une quelconque des revendications 1 à 5, **caractérisé en ce que** le moteur (11) est accouplé à au moins un ressort (20) au niveau de l'arceau de sécurité (8) et/ou au niveau de la partie fixée au véhicule.

7. Système de retenue selon au moins l'une quelconque des revendications 1 à 6, **caractérisé en ce que** le moteur (11) présente au moins un dispositif de signalisation de position.

8. Système de retenue selon la revendication 7, **caractérisé en ce que** le dispositif de signalisation de position influence la conduite du véhicule (2) lorsque l'arceau de sécurité (8) ne se trouve pas dans la position de retenue (9).

9. Système de retenue selon au moins l'une quelconque des revendications 1 à 8, **caractérisé en ce que** le moteur (11) est en liaison fonctionnelle avec un dispositif de freinage du véhicule, de telle sorte que l'arceau de sécurité (8), lorsque le véhicule (2) est prêt à être conduit, soit amené dans la position de retenue (9).

10. Système de retenue selon au moins l'une quelconque des revendications 1 à 9, **caractérisé en ce que** l'axe (7) est supporté au niveau d'une colonne (3), d'un capot de moteur et/ou d'un capot de batterie (4) du véhicule (2).

11. Système de retenue selon au moins l'une quelconque des revendications 1 à 10, **caractérisé en ce que** l'arceau de sécurité (8) peut en outre être pivoté vers l'extérieur autour d'un axe supplémentaire en vue d'effectuer des travaux de révision sur le véhicule (2).
